# EUROPÄISCHE PATENTSCHRIFT

(11) **EP 1 187 529 B1**
(45) Veröffentlichungstag und Bekanntmachung des Hinweises auf die Patenterteilung: **19.07.2006**
(21) Anmeldenummer: 00945691.4
(22) Anmeldetag: 29.05.2000
(51) Int. Cl.: A01K 23/00, A01K 13/00

(54) **HALTEGESCHIRR MIT URIN-SAMMELVORRICHTUNG**
HARNESS SYSTEM COMBINED WITH A URINE COLLECTING DEVICE
ENSEMBLE HARNAIS AVEC DISPOSITIF DE RECUPERATION D'URINE

(30) Priorität: 01.06.1999 EP 99109366
(43) Veröffentlichungstag der Anmeldung: 20.03.2002
(73) Patentinhaber: Solvay Pharmaceuticals GmbH, 30173 Hannover (DE)
(72) Erfinder: FRINK, Martin, D-30179 Hannover (DE)
(74) Vertreter: Gosmann, Martin
(86) Internationale Anmeldenummer: PCT/EP2000/004872
(87) Internationale Veröffentlichungsnummer: WO 2000/072667

(56) Entgegenhaltungen:
- FR-A- 925 362
- FR-A- 2 193 545
- US-A- 3 036 553
- US-A- 4 893 587

## Beschreibung

Die vorliegende Erfindung betrifft ein Haltegeschirr mit einer Urin-Sammelvorrichtung für Pferde. Das erfindungsgemäße Haltegeschirr mit Urin-Sammelvorrichtung ist hierbei insbesondere für die Gewinnung eines natürlichen Gemisches konjugierter Oestrogene aus dem Harn trächtiger Stuten vorgesehen.

Oestrogene werden in der Medizin zur Hormonsubstitutionstherapie eingesetzt. Insbesondere werden Oestrogengemische zur Behandlung und Prophylaxe der bei Frauen auftretenden Beschwerden der Wechseljahre nach natürlicher oder artifizieller Menopause eingesetzt. Hierbei haben sich natürliche Gemische konjugierter Oestrogene (CE = conjugated estrogen), wie sie im Harn trächtiger Stuten (PMU = pregnant mares' urine) vorliegen, als besonders wirksam und gut verträglich erwiesen.

Das Sammeln des Urins (Harn) ist daher ein bedeutender Teilschritt in der Hormongewinnung und erfordert geeignete Vorrichtungen, die das Auffangen des Urins in praktikabler und tierverträglicher Weise gestatten. Insbesondere sollte die Vorrichtung leicht zu tragen und mit der normalen Verhaltensweise und den Mobilitäts- und Ruhebedürfnissen des Pferdes verträglich sein. Weiterhin sollte die Vorrichtung aber auch das flexible (leichtes Anbringen und Entfernen bzw. Wechseln), möglichst reine (keine Faeces) und Hormon-schonende Sammlung des Urins gestatten.

Das Geschirr sollte sich leicht an die individuellen Dimensionen des Pferdes anpassen lassen und die Urin-Sammelvorrichtung ausreichend in der gewünschten Position am Pferd fixieren. Nach dem Befestigen der Urin-Sammelvorrichtung sollte möglichst kein oder nur seltenes bis gelegentliches Nachadjustieren erforderlich werden und - auch bei möglichst weitgehender Bewegungsfreiheit des Pferdes - eine möglichst verlustfreie Urin-Sammlung sichergestellt sein.

Sammelvorrichtungen für Urin und/oder Stallmist von Tieren, insbesondere Pferden, sind bereits in unterschiedlichsten Ausgestaltungsformen für hygienische, diagnostische aber auch präparative Zwecke entwickelt worden.

Das Dokument FR 2.193.545 (entsprechend US 3,850,159) offenbart eine Auffang/Haltevorrichtung für Urin von insbesondere weiblichen Pferden; diese Vorrichtung umfasst einen, im wesentlichen unter dem Bauch des Tieres befindlichen rinnenförmigen Abschnitt (i) bestehend aus einem Bodenteil und zwei aufrecht stehenden Seitenwänden, einen Auffangbehälter (ii), der sich unterhalb des rinnenförmigen Abschnitts befindet und mit diesem über eine Öffnung in Verbindung steht, und einen sich zur Hinterseite des Pferdes erstreckenden Zuleitungsabschnitt (iii) bestehend aus einem Bodenteil und zwei aufrecht stehenden Seitenwänden, die eine Verlängerung des rinnenförmigen Abschnitts präsentieren, und einem weiteren Abschnitt in Form einer flachen Lasche, die verlängernd vom Bodenteil des Zuleitungsabschnitts ausgeht und so positioniert ist, dass der Urin-Fluss des Pferdes in den Zuleitungsabschnitt umgelenkt wird, wenn die Vorrichtung mit vorgesehenen Befestigungselementen am Pferd angebracht ist.

Das Dokument WO 97/21343 beschreibt ein Auffangsystem für Stallmist und Urin für Pferde, wobei dieses Auffangsystem umfasst: einen flexiblen länglichen Beutel, der im wesentlichen mit dem Bauch des Tieres konform ist, und der sich von der Hinterseite des Tieres nach vorn zum Rippenbereich oder zu ihm hin erstreckt, einen Urin und/oder Stallmist auffangenden hinteren Behälter, der den Hauptteil des Auffangsystem bildet, und der unter dem Schwanz des Tieres und im wesentlichen zwischen seinen Hinterbeinen angeordnet werden kann, einen vorderen Teil des Beutels, der eine Blase aus relativ flexiblem Material enthält, welche den vorderen Teil der Vorrichtung darstellt, und Befestigungsmittel, die das Anbringen des Beutels am Tier ermöglichen, wobei insbesondere der hintere Behälter für festere Bestandteile und der vordere Teil für die flüssigeren Bestandteile der Exkremente vorgesehen ist und durch einen Filter vom hinteren Behälter abgetrennt ist.

Das Dokument FR 925,362 offenbart eine Urinsammelvorrichtung mit einem Auffangbehälter, der sich im wesentlichen zwischen den Hinterbeinen des Pferdes befindet und am Hinterteil des Pferdes befestigt wird, wobei der Auffangbehälter am oberen Ende eine Einlassöffnung für den Urin hat und eine Verlängerung in Form einer Lasche aufweist, die im wesentlichen dazu dient, den austretenden Urin nach unten in den Sammelbehälter zu leiten, und Befestigungsmitteln, die den Auffangbehälter in einer geeigneten Position am Pferdekörper fixieren.

Das Dokument US 3,036,553 offenbart eine Urinsammelvorrichtung bestehend aus einem schlauchförmigen Sammelbehälter sowie einem Adapter in Form eines ovalen Ringes, der an dem oberen offenen Ende des Sammelbehälters befestigt ist, sowie einem an dem Ring befestigten Haltegeschirr, welches den Adapter in der gewünschten Position um die Vulva herum fixiert.

Sofern die vorstehend beschriebenen Sammelvorrichtungen für eine quantitative Gewinnung von nicht kontaminiertem Urin geeignet sind, weisen sie durch ihre individuelle Ausgestaltung jedoch Nachteile auf, indem sie beispielsweise durch ihre offene Ausgestaltung eine freie Bewegung der Tiere unmöglich machen (US 3,850,159), nur schwierig am Pferd zu befestigen sind (US 3,036,553) oder keine flexible Aufhängung der Urinsammelvorrichtung am Haltegeschirr ermöglichen (FR 925,362).

Es bestand daher die Aufgabe ein Haltegeschirr mit einer flexibel zu befestigenden und wechselbaren Urin-Sammelvorrichtung für Pferde zur Verfügung zu stellen, die den hohen Anforderungen in bezug auf eine praktikable Einsetzbarkeit im Großmaßstab und in bezug auf den Tragekomfort für die Pferde gerecht wird.

Die Aufgabe wird allgemein gelöst durch das in den Ansprüchen angegebene Haltegeschirr und die dort angegebene Urin-Sammelvorrichtung (Stuten-Urinal), und insbesondere durch die Kombination des Haltegeschirrs mit dem Stuten-Urinal, sowie eine besondere Ausgestaltung des Kopfteils dieses Stuten-Urinals.

Die Erfindung schlägt daher ein Haltegeschirr mit Urin-Sammelvorrichtung für Pferde, insbesondere Stuten, vor, welches sich durch die wie folgt angeordneten Elemente auszeichnet:
A) ein Grundgeschirr aus Gurten, umfassend:
   - einen das Pferd umspannenden beidseitig vom Rücken zur Unterbrust verlaufenden Bauchgurt (1), an dem jeweils im seitlichen oberen Teil in einigem Abstand zueinander wenigstens zwei übliche, längenverstellbare Befestigungselemente (1a) angebracht sind;
   - einen um die Vorderbrust (Bug) herum etwa horizontal auf beiden Seiten des Pferdes jeweils bis zum Bauchgurt verlaufenden Brustgurt (2);
   - einen vom Bug, zwischen den Vorderbeinen hindurch zum Bauchgurt verlaufenden Unterbrustgurt (3);
   - einen vom Widerrist beidseitig des Pferdes zum Brustgurt verlaufenden Widerristgurt (4);
   - einen vom Widerristgurt entlang der Wirbelsäule über Rücken, Lende und Kruppe des Pferdes bis zum Schweifansatz verlaufenden, längenverstellbaren Schweifriemen (5) mit einer den Schweifansatz umfassenden Schweifschlaufe (5a);
   - auf jeder Seite des Pferdes je einen, vom Widerristgurt etwa in Höhe des Schulteransatzes etwa horizontal bis zum Bauchgurt verlaufenden Seitengurt (6);
   wobei die einzelnen Gurte des Grundgeschirrs mit üblichen Elementen zur Einstellung der Gurtlängen ausgerüstet sind und in einer für Pferdegeschirre üblichen Weise, erforderlichenfalls vollständig oder teilweise lösbar, miteinander verbunden sind; und
B) ein etwa den Lenden- und Kruppen-Bereich bedeckendes, seitlich bis maximal etwa zur unteren Rumpflinie herabfallendes, grobmaschiges Netz (7), welches durch die am oberen Teil des Bauchgurtes befindlichen längenverstellbaren Befestigungselemente (1a) gehalten wird, und an welchem weiterhin
C) eine Urin-Sammelvorrichtung lösbar, aber Lage-fixierend aufgehängt ist, wobei diese Urin-Sammelvorrichtung ihrerseits umfasst:
   - einen langgestreckten, unterhalb des Pferdebauches in etwa horizontaler Lage aufhängbaren Sammelbeutel (8);
   - ein sich an den Sammelbeutel im Bereich der Pferdehinterbeine anschließendes, sich trichterförmig verjüngendes Mittelteil (9), das zwischen den Hinterbeinen hindurchführt und zum Pferdehinterteil hin in einen schlauchförmigen Stutzen (9a) mit in etwa vertikaler Anordnung übergeht;
   - ein auf dem Stutzen (9a) sitzendes, mit diesem über einen schlauchförmigen Hals (10a) fest verbundenes Kopfteil (10) mit einer an die Pferdevulva angepaßten, an dieser weitgehend dicht anliegenden Urin-Auffangmuschel (10b); und
   - zur Befestigung der Urin-Sammelvorrichtung an einem Haltegeschirr wenigstens einige, mit einer oder mehreren Ösen versehene Laschen (11a) und (11b), wobei
      a) die Laschen (11a) beidseitig im seitlichen, oberen Bereich des Sammelbeutels (8) angeordnet sind, und
      b) die Laschen (11b) beidseitig im oberen Bereich des Kopfteils (10) rückseitig zur Urin-Auffangmuschel (10b) angeordnet sind.

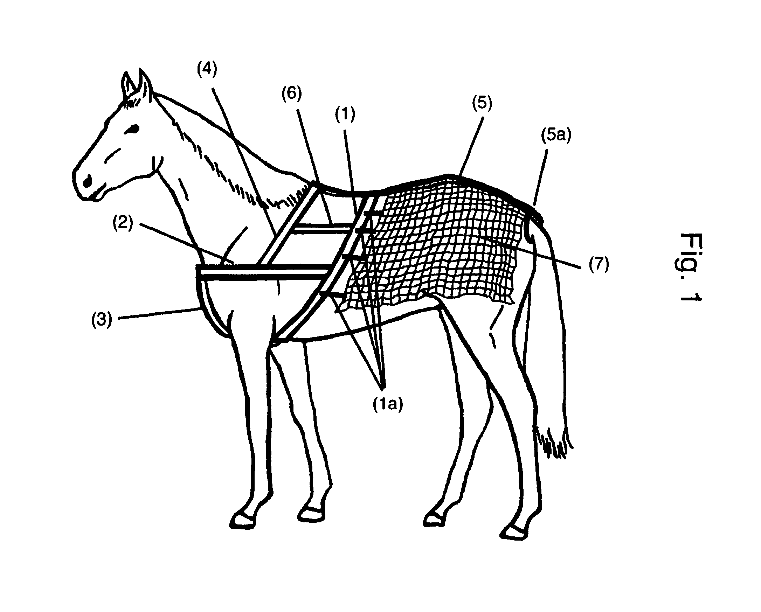

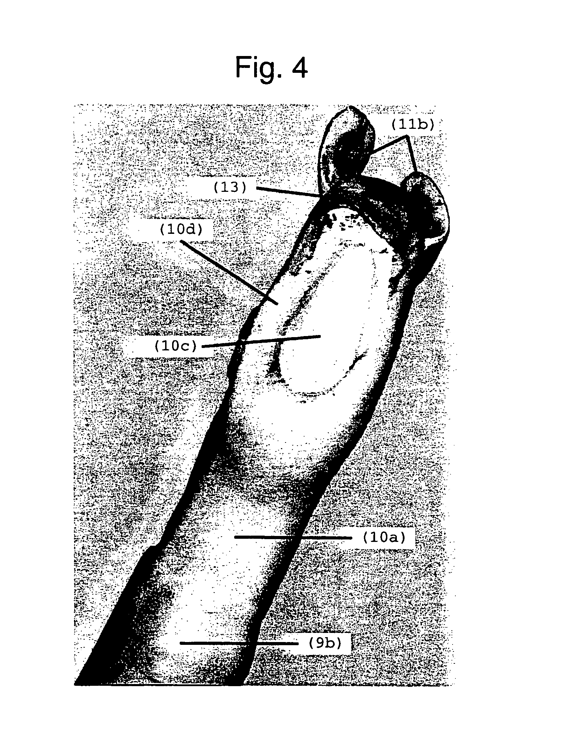

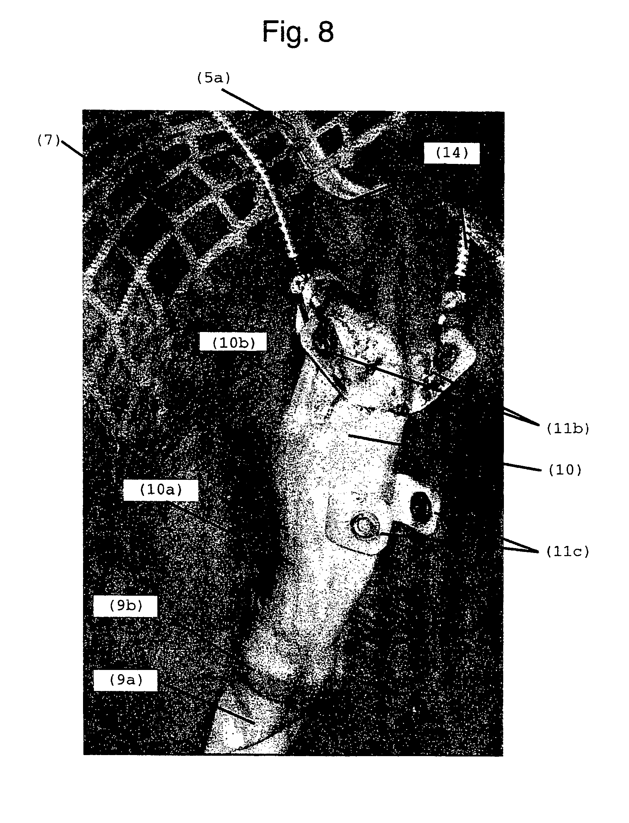

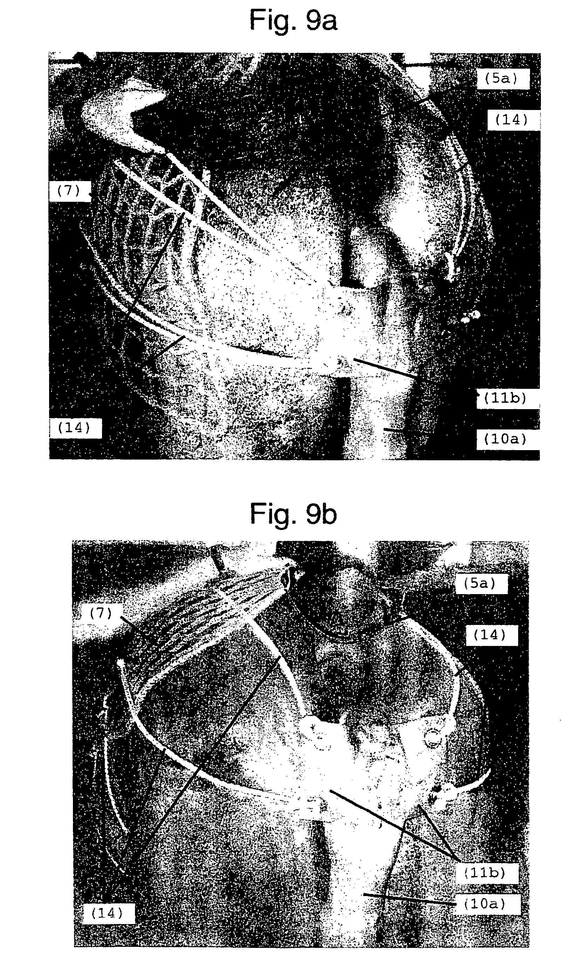

Die Erfindung wird im folgenden in ihren einzelnen Details weiter beschrieben und durch die Figuren 1 bis 9 zusätzlich erläutert.

Für die Ausgestaltung der Erfindung wird in einem Aspekt insbesondere ein Haltegeschirr vorgeschlagen, welches sich zur Befestigung einer Urin-Sammelvorrichtung an Pferden eignet und folgende Merkmale aufweist:
A) ein Grundgeschirr aus Gurten, umfassend:
   - einen das Pferd umspannenden beidseitig vom Rücken zur Unterbrust verlaufenden Bauchgurt (1), an dem jeweils im seitlichen oberen Teil in einigem Abstand zueinander wenigstens zwei übliche, längenverstellbare Befestigungselemente (1a) angebracht sind;
   - einen um die Vorderbrust (Bug) herum etwa horizontal auf beiden Seiten des Pferdes jeweils bis zum Bauchgurt verlaufenden Brustgurt (2);
   - einen vom Bug, zwischen den Vorderbeinen hindurch zum Bauchgurt verlaufenden Unterbrustgurt (3);
   - einen vom Widerrist beidseitig des Pferdes zum Brustgurt verlaufenden Widerristgurt (4);
   - einen vom Widerristgurt entlang der Wirbelsäule über Rücken, Lende und Kruppe des Pferdes bis zum Schweifansatz verlaufenden, längenverstellbaren Schweifriemen (5) mit einer den Schweifansatz umfassenden Schweifschlaufe (5a);
   - auf jeder Seite des Pferdes je einen, vom Widerristgurt etwa in Höhe des Schulteransatzes etwa horizontal bis zum Bauchgurt verlaufenden Seitengurt (6);
   wobei die einzelnen Gurte des Grundgeschirrs mit üblichen Elementen zur Einstellung der Gurtlänge ausgerüstet sind und in einer für Pferdegeschirre üblichen Weise, erforderlichenfalls vollständig oder teilweise lösbar, miteinander verbunden sind; und
B) ein etwa den Lenden- und Kruppen-Bereich bedeckendes, seitlich bis maximal etwa zur unteren Rumpflinie herabfallendes, grobmaschiges Netz (7), welches durch die am oberen Teil des Bauchgurtes befindlichen, längenverstellbaren Befestigungselemente gehalten wird, und welches zur lagefixierenden, aber dennoch lösbaren Aufhängung einer unterhalb des Pferdebauches tragbaren Urin-Sammelvorrichtung dient.

In einer Variante des Haltegeschirrs kann der Widerristgurt (4) sich gegebenenfalls auf beiden Seiten des Pferdes etwa in Höhe des Schulteransatzes beginnend in Richtung zum Brustgurt Y-förmig in zwei Teilriemen aufteilen. Hierduch kann gewünschtenfalls die Stabilität und der Sitz des Haltegeschirrs am Pferd zusätzlich positiv beeinflußt werden.

Bei dem Pferdegeschirr A) kann es sich um ein an sich übliches Pferdegeschirr handeln, das in handwerklicher oder maschineller Fertigung an den im Rahmen der vorliegenden Erfindung angestrebten Verwendungszweck angepaßt wurde. Die einzelnen Gurte des Haltegeschirrs können aus an sich üblichen Materialen, wie Leder oder anderen Materialien gefertigt sein, die auch sonst für die Herstellung von Zaumzeug und Pferdegeschirr dienen. Hierbei kommen auch Verbundkonstruktionen in Betracht, z.B. auf Leder angebrachte Verstärkungselemente in Bereichen erhöhter Materialbeanspruchung. Als Materialien für solche Verstärkungselemente können flexible Kunststoffstreifen oder -gewebe bzw. auch Feuerwehrschlauchgewebe dienen. Die einzelnen Gurte sowie sonstigen Elemente des Pferdegeschirrs A) können in einer an sich für Pferdegeschirre üblichen Weise miteinander verbunden sein. Feste Verbindungen der Gurte können durch Nähte oder Nieten bewirkt werden. Das Pferdegeschirr A) sollte jedoch eine gewisse Flexibilität im Hinblick auf die individuelle Anpassung an die jeweiligen Pferdeproportionen gestatten. Sofern daher die einzelnen Gurte nicht von vorneherein in den jeweiligen Verbindungsbereichen über längenverstellbare Verbindungselemente - wie z.B. übliche Gurtschnallen, Schnellspannriemen oder andere variierbare Schnellverschlüsse lösbar miteinander verbunden sind, sondern miteinander vernäht oder vernietet, also fest miteinander verbunden sind, sollten die Gurte an anderer Stelle selbst mit entsprechenden, üblichen Elementen zur Einstellung und Adjustierung der Gurtlängen ausgerüstet sein, wie z.B. die vorgenannten Gurtschnallen, Schnellspannriemen oder andere übliche Elemente zur Längenvariation. Um das Anlegen des Geschirrs in einfacher Weise durch Überstreifen über den Pferdekopf zu ermöglichen wird zweckmäßiger Weise der Bauchgurt im Bauchbereich zu öffnen und lösbar mit dem Unterbrustgurt verbunden sein. Zum Schutz bzw. zur Schonung einzelner Körperpartien des Pferdes kann das Geschirr A) weiterhin Polsterungen unterschiedlicher Stärke je nach Körperpartie aufweisen. Eine Polsterung kann insbesondere für den Vorderbrustbereich, Widerrist und Rücken, ggf. aber auch zusätzlich an der seitlichen Brustwand des Pferdes, wünschenswert sein. Es können übliche Materialien für die Polsterung verwendet werden; beispielsweise ist Filzstoff unterschiedlicher Stärke geeignet.

Ein besonderes Element B) des erfindungsgemäßen Haltegeschirrs zur Aufhängung bzw. Befestigung einer Urin-Sammelvorrichtung an Pferden stellt das grobmaschige Netz (7) dar. Die Verwendung eines Netzes im Rahmen des Haltegeschirrs der vorliegenden Erfindung weist z.B. den Vorteil auf, daß es eine Vielzahl von Befestigungsmöglichkeiten für beliebige Urin-Sammelvorrichtungen bietet und somit diese Sammelvorrichtungen im idealer Weise mit einer großen Flexibilität am Pferd fixiert und adjustiert werden können. Dieses Netz ist daher für eine optimale Aufhängung und Fixierung von Urin-Sammelvorrichtungen insbesondere für Stuten sehr vorteilhaft, da hier ein möglichst verlustfreies Sammeln des Stuten-Urins nur bei dauerhafter einwandfreier Fixierung und Adjustierung der Urin-Sammelvorrichtung sichergestellt werden kann. Durch die Verwendung des Netzes zur Aufhängung von Urin-Sammelvorrichtungen und die damit gegebenen Möglichkeiten zur Fixierung und Adjustierung dieser Urin-Sammelvorrichtungen wird eine bedeutende Verbesserung der Urin-Sammlung erreicht. Ferner wird durch das Netz - im Gegensatz z.B. zu einer Pferdedecke - ein mögliches Schwitzen des Pferdes weitgehend vermieden. Eine Beeinträchtigung der Oestrogengewinnung durch Hormonverlust über Schweißsekretion ist daher bei Verwendung des Netzes im Rahmen des erfindungsgemäßen Haltegeschirrs nicht zu befürchten.

Die seitlichen Enden des Netzes können bis maximal zur unteren Rumpflinie herabhängen; in einer anderen beispielhaften Ausführung reicht es, wenn die seitlichen Enden des Netzes bis etwa auf die Höhe des Brustgurtes (2) herabfallen. Die herabhängenden Enden des Netzes können gewünschtenfalls noch durch einen oder mehrere locker angelegte, unter dem Pferd von der einen zur anderen Seite geführte Riemen zusätzlich gehalten werden. Das grobmaschige Netz kann aus an sich allen für das Pferd verträglichen Materialen bestehen, wie insbesondere z.B. Nylon, ggf. aber auch Kunstfasern, Leder oder Hanf. Die Stärke des Netzgewebes sollte dabei ausreichend robust ausgelegt sein, um auch länger Beanspruchung in der Praxis standzuhalten. Die Netzränder werden in vorteilhaften, bevorzugten Ausgestaltungen des Netzes verstärkt ausgelegt sein. Desweiteren empfiehlt es sich, das Netz an den Rändern z.B. hitzezubehandeln, um durch ein Anschmelzen der Nylonfasern die Gefahr des Auffaserns zu unterbinden.

Die nachfolgenden Angaben zu den Abmessungen des Netzes sollen die Ausgestaltung dieses Aspektes der Erfindung nur beispielhaft erläutern. Es versteht sich von selbst, daß der Fachmann diese Maße durchaus variieren und an die jeweils individuellen Gegebenheiten, Erfordernisse oder sonstige Rahmenbedingungen bei der Ausführung der Erfindung an einem gegebenen Ort anpassen kann. Die Maschengröße des Netzes kann im allgemeinen in der Größenordnung von etwa 30 bis 60 mm liegen. Als zweckmäßig hat sich insbesondere eine Maschengröße von etwa 45 mm erwiesen. Der Querschnittsdurchmesser (Stärke) der Netzschnüre wird etwa im Bereich von 3 bis 8 mm, insbesondere bei etwa 5 mm, liegen.

Ein weiterer Aspekt der Erfindung betrifft eine Urin-Sammelvorrichtung für Stuten (Stuten-Urinal), die sich durch folgende Merkmale auszeichnet:
- einen langgestreckten, unterhalb des Pferdebauches in etwa horizontaler Lage aufhängbaren Sammelbeutel (8);
- ein sich an den Sammelbeutel im Bereich der Pferdehinterbeine anschließendes, sich trichterförmig verjüngendes Mittelteil (9), das zwischen den Hinterbeinen hindurchführt und zum Pferdehinterteil hin in einen schlauchförmigen Stutzen (9a) mit in etwa vertikaler Anordnung übergeht;
- ein auf dem Stutzen (9a) sitzendes, mit diesem über einen schlauchförmigen Hals (10a) fest verbundenes Kopfteil (10) mit einer an die Pferdevulva angepaßten, an dieser weitgehend dicht anliegenden Urin-Auffangmuschel (10b); und
- zur Befestigung der Urin-Sammelvorrichtung an einem Haltegeschirr wenigstens einige, mit einer oder mehreren Ösen versehene Laschen (11a) und (11b), wobei
   a) die Laschen (11a) beidseitig im seitlichen, oberen Bereich des Sammelbeutels (8) angeordnet sind, und
   b) die Laschen (11b) beidseitig im oberen Bereich des Kopfteils (10) rückseitig zur Urin-Auffangmuschel (10b) angeordnet sind.

Die Urin-Sammelvorrichtung der vorliegenden Erfindung kann aus an sich allen für das Pferd verträglichen, Urinbeständigen Materialien wie z.B. Latex, Silikon oder dergleichen bestehen und in einer für diese Materialien an sich üblichen Verarbeitungsweise (z.B. im Tauchverfahren oder im Spritzgußverfahren) gefertigt werden. Gewünschtenfalls können Stoffgewebe als Grundlage dienen, die mit den vorgenannten Materialien oder auch mit Gummi- oder Polyurethan-Materialien etc., wie diese zum Beschichten von Regenkleidung bzw. Zeltplanen verwendet werden, beschichtet werden. Als Stoffgewebe können vielfältige Materialien aus Natur- oder Kunstfasern eingesetzt werden, z.B. Baumwollgewebe, Nylongewebe oder dergleichen. Die Einzelteile des Urinals können hierbei verklebt oder verschweißt sein. Gewünschtenfalls kann das gesammte Urinal nach dem Zusammenfügen der einzeln gefertigten Teile noch insgesamt (in üblicher Verfahrenstechnik, z.B. im Tauchverfahren oder im Spritzgußverfahren) mit einer zusätzlichen Latex- oder Silikonschutzschicht gewünschter Dicke überzogen werden. Als zweckmäßige Materialien haben sich bisher insbesondere Latex (handelsübliche Typen) oder gummierte Stoffgewebe, für einzelne Teile aber auch Silikon, erwiesen. Latex oder Silikon wird hierbei z.B. für die Fertigung des Kopfteiles (10) und Latex oder gummierte Stoffgewebe insbesondere für die Fertigung des Auffangteiles, d.h. Sammelbeutel (8) und wahlweise Mittelstück (9), bevorzugt zum Einsatz gelangen. Die Urin-Sammelvorrichtung sollte für den Einsatzzweck ausreichend robust, aber dennoch einigermaßen flexibel ausgebildet sein, um sowohl Strapazierfähigkeit als auch Tragekomfort gleichermaßen zu gewährleisten. Aufgrund der insgesamt flexiblen Ausgestaltung des Stuten-Urinals kann es zweckmäßig sein, solche Bereiche, die beim Gebrauch besonderer Beanspruchung unterliegen oder einer besseren Formstabilisierung bedürfen, mit Versteifungen zu versehen. Beispielsweise hat es sich als vorteilhaft erwiesen, im Mittelteil (9) den Bereich (9b) des Stutzens (9a), auf dem der Hals (10a) des Kopfes (10) überkragend aufsitzt, innen durch einen kurzen rohrförmigen Einsatz zu versteifen.

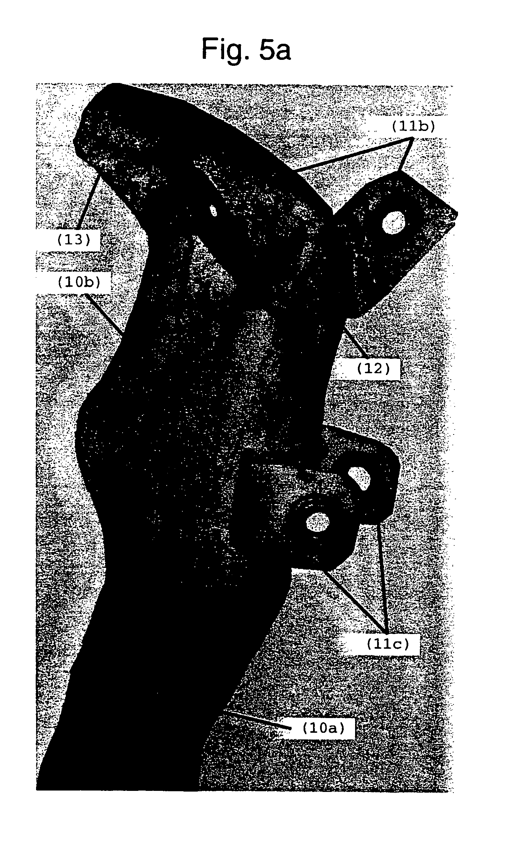

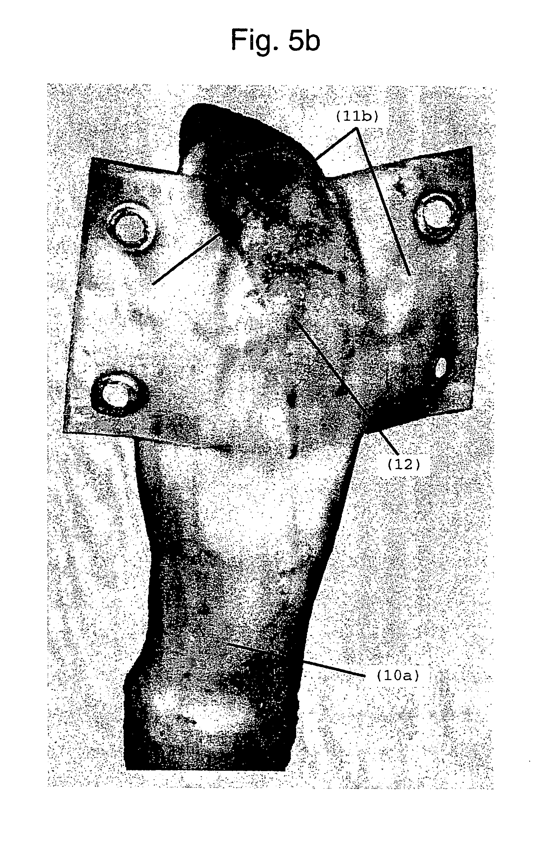

Die Aufhängsel-Laschen mit Ösen zur Befestigung der Urin-Sammelvorrichtung am Netz (7) können beliebig gestaltet sein, solange sie ihren Zweck erfüllen. So können z.B. die im Bereich des Sammelbeutels seitlich angebrachten Laschen Einzellaschen mit jeweils nur einer Öse oder auch zusammengefaßte Flügellaschen mit mehreren Ösen sein. Zweckmäßig sind z.B. Einzel- oder Flügellaschen (11a) mit 1 bis 5, insbesondere Flügellaschen mit 2 bis 3 Ösen. Die Laschen (11b) am Kopf (10) des Urinals können anstelle von Einzellaschen mit jeweils nur 1 Öse ebenfalls als kleine Flügellaschen mit 2 bis 3 Ösen, wie z.B. in Fig. 5b ersichtlich, ausgestaltet sein. Gewünschtenfalls kann das Stuten-Urinal im mittleren hinteren Bereich des Kopfteils (10) weitere Laschen (11c), wie in Fig. 5a gezeigt, besitzen; diese Laschen (11c) sind jedoch rein fakultativ und können. wie in Fig. 5b ersichtlich, auch entfallen. Die Befestigung der Urin-Sammelvorrichtung über die Laschen an das Netz des Haltegeschirrs kann auf vielfältige Weise, z.B. über Schnüre, Expander, Riemen oder dergleichen erfolgen. Als zweckmäßig hat sich für den praktischen Einsatz insbesondere die Befestigung durch Expander erwiesen. Es können handelsübliche Expander mit Haken verwendet werden; vorteilhafter aufgrund der geringeren Verletzungsgefahr für das Pferd sind jedoch Expander oder Gummiseile mit flach anliegenden Karabinerhaken, z.B. aus Kunststoff.

Eine beispielhafte Ausgestaltung des Stuten-Urinals soll anhand folgender Abmessungen weiter erläutert werden, wobei die angegebenen Maße als Größenordnung zu verstehen sind, die vom Fachmann durchaus variiert und an jeweils individuelle Gegebenheiten und Erfordernisse, z.B. der Pferdetyp, angepaßt werden können. Die Länge des Sammelbeutels (8), einschließlich des horizontalen Anteils des Mittelstückes (9), wird im Bereich von 40 bis 55 cm liegen, mit einem Querschnittdurchmesser von etwa 12 bis 20 cm, insbesondere etwa 15 cm. Die Höhe des Mittelteils (9), von der Unterkante des Sammelbeutels bis Oberkante des Stutzens (9a), beträgt zweckmäßig etwa 30 bis 35 cm, mit einem Querschnittdurchmesser im Bereich des Stutzens (9a) von etwa 6 bis 8 cm. Das rohrförmige Versteifungselement im Bereich (9b) kann eine Höhe von etwa 7 bis 10 cm und einen Querschnittsdurchmesser von etwa 6 bis 8 cm aufweisen. Das sich an das Mittelteil (9) anschließende Kopfteil (10) wird zweckmäßig eine Höhe (vertikal gemessen vom Stutzen bis Oberkante) von etwa 30 bis 35 cm, zuzüglich des Überlappungsbereiches mit dem Stutzen (9a), aufweisen. Weitere Details und Abmessungen zum Kopfteil werden weiter unten noch gesondert beschrieben. Die Abmessungen der Flügellaschen (11a) betragen in horizontaler Länge bei 3 Ösen in etwa 15 bis 20 cm und bei 4 Ösen in etwa 20 bis 30 cm, und in der Höhe insgesamt jeweils etwa 13 bis 15 cm, mit einem freiliegenden - d.h. der nicht mit dem Sammelbeutel (8) durch Verklebung oder Verschweißung verbundene - vom Sammelbeutel (8) abstehende Ösen-Bereich von etwa 6 cm in der Höhe. Einzellaschen am Kopfteil (10) weisen in der Regel einen freiliegenden, abstehenden Ösen-Bereich von etwa 6 x 6 cm ± 1 cm auf. Kleine Flügellaschen mit z.B. 2 Ösen werden eine Breite von etwa 8 bis 10 cm und eine Höhe von ebenfalls ca. 6 cm ± 1 cm aufweisen. Zweckmäßig sind insbesondere mittelgroße Flügellaschen (11b) am Kopfteil (10), wie diese in Fig. 5b zu sehen sind. Betrachtet man das Kopfteil (10) von hinten, erkennt man, daß die Flügellaschen (11b) dieser Variante der Erfindung sozusagen ein auf dem Kopfteil (10) aufgebrachtes Rechteck mit horizontalen Maßen von etwa 20 bis 22 cm und vertikalen Maßen von etwa 12 bis 14 cm bilden, wobei in den vier Ekken dieses Rechteckes die Ösen eingebracht sind. Diese Ausgestaltung der Laschen (11b) trägt vorteilhaft zur Stabilität des Kopfteiles, insbesondere bei Gebrauch in bezug auf Robustheit aber auch in bezug auf Lagefixierung, bei. Das Kopfteil erhält so von hinten mehr Stabilität und die Laschen können nicht so schnell ausreißen. Die Wandstärke der Urin-Sammelvorrichtung liegt im Millimeterbereich bei Verwendung von z.B. Latex oder gummierten Stoffgeweben, kann aber im Fall von Silikon durchaus bis etwa 10 bis 15 mm betragen. Die Wandstärke kann je nach Grad der gewünschten Flexibilität bzw. Steifigkeit im Einzelfall angepaßt werden, wobei Laschen wegen der erhöhten Beanspruchung etwas stärker als die übrigen Teile des Urinals ausgelegt sein werden.

Die vorliegende Erfindung schlägt in einem weiteren Aspekt ihrer Ausgestaltung ein Kopfteil (10) für eine Urin-Sammelvorrichtung (Stuten-Urinal) vor, das folgende Merkmale aufweist:
- eine im oberen Bereich angeordnete, in seitlicher Ansicht auf der Innenseite S-förmig verlaufende, an die Pferdevulva angepaßte und an dieser weitgehend dicht anliegende Urin-Auffangmuschel (10b), und wobei
- die Urin-Auffangmuschel in der Innenseitenaufsicht als ein ovaler bis eiförmiger, die Urin-Eintrittsöffnung (10c) umschließender Kranz (10d) ausgebildet ist; und
- einen im unteren Bereich des Kopfteils befindlichen, schlauchförmigen Hals (10a) der zur Verbindung des Kopfteils mit dem Einlaufstutzen (9a) eines Urin-Sammelbeutels dient.

Für eine optimale, möglichst verlustfreie Sammlung des Urins ist die Form des Kopfteils (10) der Urin-Sammelvorrichtung erfindungsgemäß in besonderer Weise so ausgestaltet, indem es eine geometrisch an die Anatomie der Pferdevulva angepaßte, dort weitgehend dicht anliegende Urin-Auffangmuschel (10b) aufweist. Die Urin-Auffangmuschel schließt den oberen Bereich des Kopfteils (10) ab und verläuft in seitlicher Ansicht auf der zur Vulva hin ausgerichteter Innenseite etwa S-förmig. In der Innenseitenaufsicht ist die Urin-Auffangmuschel als ein ovaler bzw. eiförmig bis tropfenförmig, die Urin-Eintrittsöffnung umschließender Kranz (10c) ausgebildet. Die Urin-Auffangmuschel besteht vorzugsweise aus denselben flexiblen Materialien, wie die übrigen Teile der Urin-Sammelvorrichtung, z.B. Latex, Silikon oder dergleichen. Das Kopfteil ist ebenfalls insgesamt flexibel ausgestaltet, wobei es aber zur besseren Formstabilisierung während des Gebrauchs oder zur Verbesserung der Strapazierfähigkeit zweckmäßig sein kann, den rückwärtigen oberen Bereich des Kopfteils - d.h. im Ansatzbereich der Laschen (11b) sowie ggf. einschließlich des Bereiches von einigen Zentimetern darüber und/oder darunter - zu verstärken oder ggf. mit flexiblen Versteifungselementen zu versehen. Diese Verstärkungselemente bzw. Versteifungselemente können mit den Laschen (11b) verbunden sein und an deren Materialstärke angepaßt sein. Ein solches Versteifungselement (12) ist z.B. für Einzellaschen in Fig. 5a mit einer der rückwärtigen Kopfteilbreite entsprechenden Breite von etwa 6 bis 7 cm und einer Höhe von etwa 8 cm zu sehen. Ein bevorzugt ausgestaltetes Kopfteil (10) mit einem Versteifungselement kombiniert mit beidseitig jeweils zwei-ösigen Flügellaschen (11b) ist z.B. in Fig. 5b ersichtlich und weiter oben bereits mit beispielhaften Maßen beschrieben.

Die geometrischen Dimensionen der Auffangmuschel werden in der Regel im nachfolgenden Bereich liegen, wobei die nachstehenden Maßangaben als variabel zu verstehen und nur als beispielhafte Orientierungshilfe für die individuelle Ausgestaltung und Anpassung im konkreten Anwendungsfall, z.B. an den jeweiligen Pferdetyp, gedacht sind. Für ein normales Pferd ("Normaltyp") betragen die Maße in der Regel:
a) Dimensionen der Urin-Eintrittsöffnung (10c): Längsachse (vertikal) etwa 9 bis 13 cm; Querachse, unterer Bereich gemessen etwa 2 cm oberhalb der unteren Innenkante etwa 4 bis 7 cm, oberer Bereich gemessen etwa 2 cm unterhalb der oberen Innenkante etwa 2 bis 4 cm.
b) Kranz (10d): Längsachse (vertikal) etwa 12 bis 18 cm, Quersachse, unterer Bereich (gemessen wie bei Urin-Auffangöffnung) etwa 7 bis 12 cm, oberer Bereich (gemessen wie bei Urin-Auffangöffnung) etwa 5 bis 9 cm; Kranzstärke etwa 1,5 bis 2,5 cm.

Bei Kaltblütern ("Kaltbluttyp") ist die Urin-Eintrittsöffnung regelmäßig größer als zuvor für den Normaltyp beschrieben. So wird die Dimension der Urin-Eintrittsöffnung beim Kaltbluttyp in der Längsachse (vertikal) Maße von in etwa 13 bis 20 cm aufweisen, wobei die übrigen Maße denjenigen der für den Normaltyp unter a) und b) angegebenen Maße entsprechen.

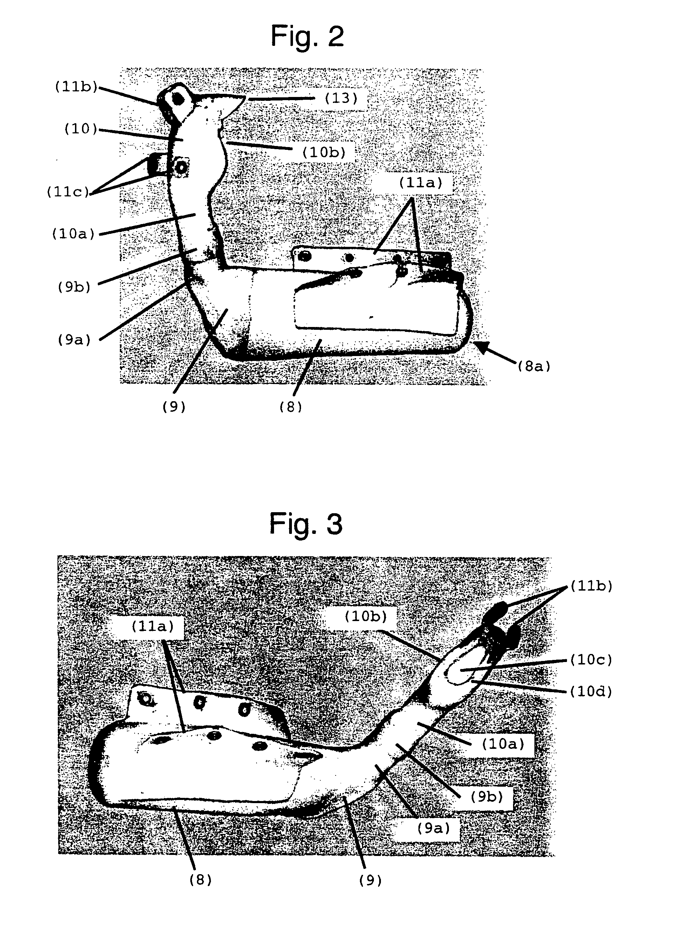

In der seitlichen Aufsicht des Kopfteiles (siehe z.B. Fig. 2) beträgt die seitliche vertikale Ausdehnung des Außenbogens des S-förmigen Kopfteiles in Höhe des unteren Endes der Urin-Auffangmuschel (10b) - d.h. in Fig. 2 etwa auf Höhe der Laschen (11c) - in etwa 10 bis 15 cm; die entsprechende seitlich vertikale Ausdehnung des darüberliegenden Innenbogens des S-förmigen Kopfteils beträgt in etwa 7 bis 12 cm.

Die Urin-Auffangmuschel kann gewünschtenfalls im oberen Kranzbereich noch eine Einkerbung (Dammkerbe) aufweisen, die sich zwischen Vulva und After quasi als Reiter über den Damm legt und vorteilhaft die Ausrichtung und mittlere Lagefixierung der Urin-Auffangmuschel über der Vulva unterstützt. Sofern sich daher die Urin-Auffangmuschel ggf. durch gelegentliches Liegen der Stute aus ihrer ursprünglichen Lage verschoben hatte, wird sich diese beim Aufrichten durch die Bewegung des Tieres leicht wieder in die richtige Lage zurechtrücken.

Weiterhin kann es insbesondere beim "Normaltyp" vorteilhaft sein, am Kopfteil (10) pferdeseitig über der Urin-Auffangmuschel ein dünnes, sehr flexibles, z.B. aus Latex bzw. Silikon gefertigtes Vordach (13) als Kotabscheider und zum Abweisen von ggf. nach dem Koten noch geringer Mengen nachfließender Flüssigkeit vorzusehen. Das Vordach (13) ist jedoch rein fakultativ und die erfindungsgemäße Funktion des Kopfteils (10) ist auch ohne ein solches Vordach beim Gebrauch in jeder Hinsicht bereits optimal gewährleistet. In der Regel wird das Vordach daher sowohl beim Normaltyp als auch beim Kaltbluttyp nicht erforderlich sein und Pferde vom Haflingertyp kommen regelmäßig komplett ohne Vordach aus. Ein Vordach kann sich aber bei bestimmten Pferderassen, Typen oder insbesondere Stuten, die schon häufiger gefohlt haben, als zweckmäßig erweisen. Sofern das Kopfteil gewünschtenfalls mit einem Vordach (13) ausgerüstet ist, genügen bereits geringe Abmessungen, die zur Anpassung an das Tier, etwa im Bereich von 4 x 4 bis 6 x 6 cm liegen; hierbei werden etwa 2 bis 3 cm auf dem Kopfteil verklebt oder verschweißt aufliegen und die restlichen maximal 2 bis 3 cm (bzw. nach Anpassung noch weiter verkürzt auf 1 bis 2 cm) als eigentliches Vordach zur Seite der Urin-Auffangmuschel überstehen. Maximale Abmessungen dieses Daches liegen zur Anpassung an das Tier etwa im Bereich von maximal 8 x 8 bis 10 x 10 cm, wobei dann etwa 4 bis 5 cm auf dem Kopfteil verklebt oder verschweißt aufliegen und die restlichen 4 bis 5 cm als eigentliches Vordach zur Seite der Urin-Auffangmuschel überstehen. Bei der Fertigung eines Kopfteils mit Vordach sollte zweckmäßigerweise darauf geachtet werden, daß das Vordach zunächst eine Überlänge von einigen Zentimetern (beispielsweise etwa 2 bis 5 cm) aufweisen sollte, um eine bequeme individuelle Anpassung der Vordachlänge an das jeweilige Tier durch einfaches Zuschneiden und ggf. durch Runden von Ecken zu ermöglichen. Durch dieses als Kotabscheider dienende Vordach wird auch in den vorstehend angezeigten Fällen für den fakultativen Einsatz dieses Vordaches eine unerwünschte Verschmutzung des Urins durch Kot wirkungsvoll vermieden und eine gute Qualität und Reinheit des gesammelten Urins gewährleistet.

Neben den vorstehend bereits im Zusammenhang mit der Erläuterung des erfindungsgemäßen Haltegeschirrs mit Urin-Sammelvorrichtung beschriebenen Vorteile, bietet die Erfindung darüber hinaus noch weitere Vorteile.

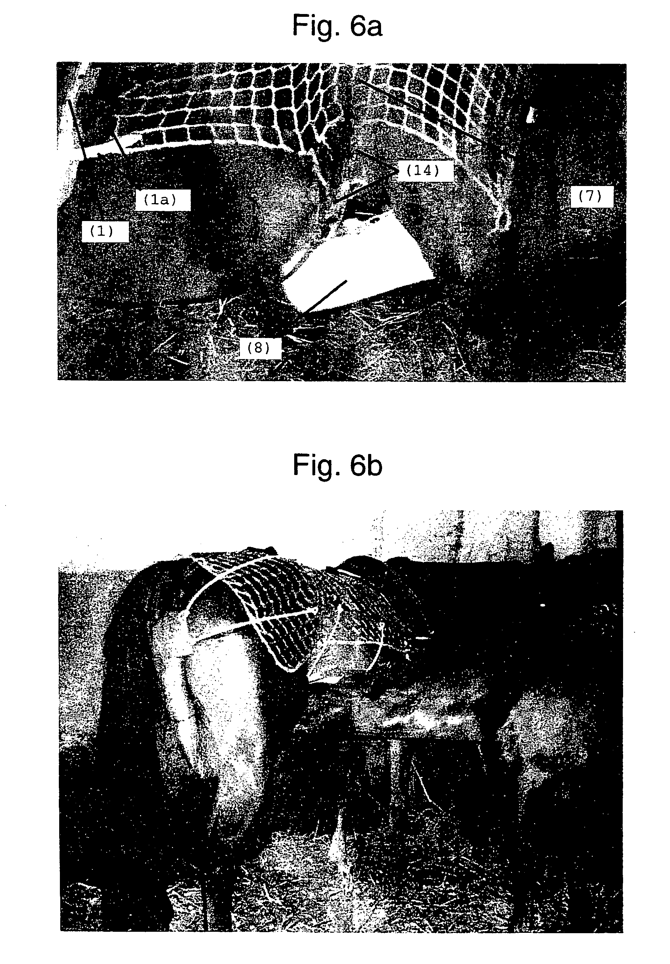

Das erfindungsgemäße Haltegeschirr mit Netz (7) ist universell einsetzbar und aufgrund der Konstruktion gut zu handhaben. Urin-Sammelvorrichtungen lassen sich flexibel und mit guter Lagefixierung daran aufhängen. Das Anbringen bzw. Abnehmen des Geschirrs kann nach erfolgter Grundeinstellung schnell mit flüssigem Bewegungsablauf durchgeführt werden, so daß eine Beunruhigung des Pferdes durch ungewollte hektische Handhabungen und die daraus resultierenden Gefahren kaum zu befürchten sind. Das Anlegen bzw. Abnehmen des Haltegeschirrs ist daher in 2 bis 3 Min. zu bewerkstelligen, wobei in der Regel lediglich die zwischen den Vorderbeinen gelegenen Bauchschnallen von Bauch- und Unterbrustgurt zu öffnen sind. Das Haltegeschirr ist sowohl mit als auch ohne Urin-Sammelvorrichtung Langzeit-tragbar. So ist z.B. eine 24-stündige Urin-Sammlung bei entsprechender Pflege und Sauberhaltung der Urin-Sammelvorrichtung möglich, wobei die Urin-Sammelvorrichtung für die täglich mindestens zweimalige Entleerung und Reinigung leicht vom Pferd abgenommen bzw. gewechselt werden kann. Das Pferd ist aufgrund des Haltegeschirrs selbst mit Urin-Sammelvorrichtung frei beweglich. Aufgrund der für das Pferd gewährleisteten hohen Flexibilität und Bewegungsfreiheit ist bei Verwendung des erfindungsgemäßen Haltegeschirrs mit oder ohne Urin-Sammelvorrichtung eine Ständerhaltung des Pferdes nicht erforderlich. Weidegang ist für die Pferde daher jederzeit möglich, auch mit angehängter Urin-Sammelvorrichtung. Ebenso können Fohlen auch bei Stuten mit angehängter Urin-Sammelvorrichtung jederzeit ohne Probleme selbständig saugen; siehe z.B. Fig. 6b. Die Urin-Sammelvorrichtung ist aufgrund der gewählten Materialien und Konstruktion sehr robust und kann sowohl in warmen oder kalten Zonen der Erde eingesetzt werden. Das erfindungsgemäße Haltegeschirr mit Urin-Sammelvorrichtung läßt sich daher sehr flexibel auf die lokalen Verhältnisse des Pferdebetriebes, in dem Urin gesammelt werden soll, einstellen. Beispielsweise kann erforderlichenfalls das gesamte Haltegeschirr und die Urin-Sammelvorrichtung leicht und schnell abgenommen und wieder angelegt werden; oder das Haltegeschirr kann längere Zeit am Pferd belassen und erforderlichenfalls nur die Urin-Sammelvorrichtung abgenommen werden, z.B. tagsüber für den Weidegang, falls nur eine Nachtsammlung von Urin vorgesehen ist; es kann aber auch das gesamte Haltegeschirr mit Urin-Sammelvorrichtung - wie vorstehend bereits ausgeführt bei entsprechender Pflege und regelmäßiger Entleerung - komplett längere Zeit am Pferd verbleiben, ohne dessen Bewegungsfreiheit bzw. die Möglichkeit zum Weidegang oder das Säugen von Fohlen einzuschränken.

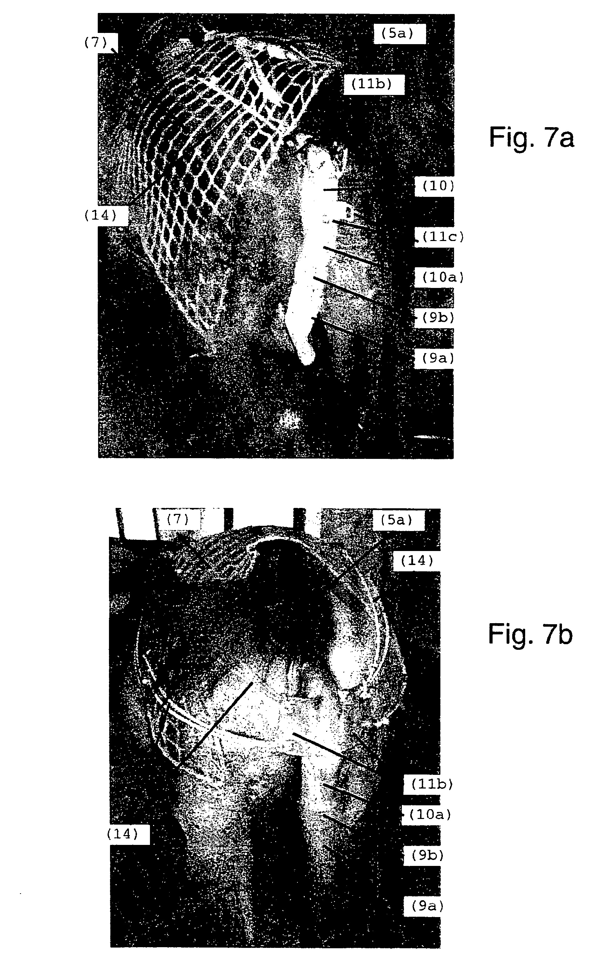

Zur Erläuterung der vorstehenden Erfindung dienen die folgenden Figuren:
Fig. 1
   Schematische Darstellung des Haltegeschirrs zum Anbringen einer Urin-Sammelvorrichtung am Pferd:
   Bauchgurt (1); längenverstellbare Befestigungselemente (1a); Brustgurt (2); Unterbrustgurt (3); Widerristgurt (4); Schweifriemen (5) mit Schweifschlaufe (5a); Seitengurt (6); Netz (7).
Fig. 2
   Seitliche Abbildung der Urin-Sammelvorrichtung mit Seitenansicht des Kopfteils (10):
   Urin-Sammelbeutel (8) mit möglicher Position eines Urin-Ablaufschlauches (8a); Mittelteil (9) mit schlauchförmigem Stutzen (9a) und Versteifungsbereich (9b); Kopfteil (10) mit Hals (10a), der den Stutzen (9a) im Versteifungsbereich (9b) überkragt; Urin-Auffangmuschel (10b); Laschen (11a) in Form von Flügellaschen mit jeweils 4 Ösen (anstelle von 3 Ösen in bevorzugter Ausführung); Einzellaschen (11b); fakultative Einzellaschen (11c), die gegebenenfalls nach oben zu den Laschen (11b) verschoben und mit diesen zu kleinen Flügellaschen mit jeweils 2 Ösen verschmolzen sein können; Vordach (13) als Kotabscheider und After-Flüssigkeitsabscheider.
Fig. 3
   Seitliche Abbildung der Urin-Sammelvorrichtung mit Innenseitenaufsicht der Urin-Auffangmuschel (10b):
   (8) bis (10a) und (11a) bis (11b) siehe Erläuterungen zu Fig. 2; Urin-Auffangmuschel (10b) mit Urin-Eintrittsöffnung (10c); Kranz (10d) der Urin-Auffangmuschel.
Fig. 4
   Vergrößerte Innenseitenaufsicht auf die Urin-Auffangmuschel (10b):
   (9b) bis (11b) siehe Erläuterungen zu Fig. 3; Vordach (13) als Kotabscheider und After-Flüssigkeitsabscheider.
Fig. 5a
   Rückseitig/seitliche Ansicht des Kopfteils (10) der Urin-Sammelvorrichtung mit Einzellaschen:
   Hals (10a) des Kopfteils Lage der Urin-Auffangmuschel (10b); Einzellaschen (11b); fakultative Einzellaschen (11c), die gegebenenfalls nach oben zu den Laschen (11b) verschoben und mit diesen zu kleinen Flügellaschen mit jeweils 2 Ösen verschmolzen sein können; Versteifung (12) im Kopfbereich, optional mit den Laschen (11b) verschmolzen; Vordach (13) als Kotabscheider und After-Flüssigkeitsabscheider.
Fig. 5b
   Rückseitige Ansicht eines bevorzugten Kopfteils (10) der Urin-Sammelvorrichtung mit beidseitig zwei-ösigen Flügellaschen:
   Hals (10a) des Kopfteils; Fluglaschen (11b); kombiniert mit Versteifung (12) im Kopfbereich, d.h. hier optional mit den Laschen (11b) verschmolzen.
Fig. 6a
   Seitliche Ansicht einer am Pferd befestigten Urin-Sammelvorrichtung:
   Bauchgurt (1) mit längenverstellbaren Befestigungselementen (1a) für das Netz (7); Urin-Sammelvorrichtung mit sichtbarem Urin-Sammelbeutel (8); Expander (14).
Fig. 6b
   Ansicht einer am Pferd befestigten im Gebrauch befindlichen Urin-Sammelvorrichtung mit Kopfteil gemäß Fig. 5b, und saugendes Fohlen:
Fig. 7a
   Rückseitige Ansicht einer am Pferd befestigten Urin-Sammelvorrichtung:
   Schweifschlaufe (5a); Netz (7); Ablaufstutzen (9a) mit Versteifungsbereich (9b) und überkragendem Hals (10a) des Kopfteiles (10) der Urin-Sammelvorrichtung; Laschen (11b) und (11c), siehe Fig. 2 für weitere Erläuterungen; Expander (14).
Fig. 7b
   Rückseitige Ansicht einer am Pferd befestigten Urin-Sammelvorichtung:
   Schweifschlaufe (5a); Netz (7); Ablaufstutzen (9a) mit Versteifungsbereich (9b) und überkragendem Hals (10a) des Kopfrteiles (10) der Urin-Sammelvorrichtung; Flügellaschen (11b); Expander (14).
Fig. 8
   Rückseitige Detail-Ansicht des am Pferd anliegenden Kopfteils (10) der Urin-Sammelvorrichtung:
   (5a) bis (14) siehe Erläuterungen zur Fig. 7a.
Fig. 9a und Fig. 9b
   Rückseitige Detail-Ansichten des am Pferd anliegenden Kopfteils (10) der Urin-Sammelvorrichtung mit Flügellaschen:
   (5a) Schweifschlaufe; Hals (10a) des Kopfteils; Flügellaschen (11b), beidseitig jeweils zwei Ösen, kombiniert mit Versteifung (12) im Kopfbereich, d.h. hier optional mit den Flügellaschen (11b) verschmolzen; Expander (14).

## Patentansprüche

1. Haltegeschirr mit Urin-Sammelvorrichtung für Pferde, insbesondere Stuten, wobei die Urin-Sammelvorrichtung umfasst
- einen langgestreckten, unterhalb des Pferdebauches in etwa horizontaler Lage aufhängbaren Sammelbeutel (8);
- ein sich an den Sammelbeutel im Bereich der Pferdehinterbeine anschließendes Mittelteil (9), das zwischen den Hinterbeinen hindurchführt; und
- Befestigungselemente zur Befestigung der Urin-Sammelvorrichtung an einem Haltegeschirr;
**dadurch gekennzeichnet, daß**
(a) das Haltegeschirr ein Grundgeschirr aus Gurten und ein etwa den Lenden- und Kruppen-Bereich bedeckendes, seitlich bis maximal etwa zur unteren Rumpflinie herabfallendes, grobmaschiges Netz (7) umfasst, an welchem die Urin-Sammelvorrichtung lösbar, aber Lage-fixierend aufgehängt ist;
(b) das Grundgeschirr aus Gurten umfasst:
- einen das Pferd umspannenden beidseitig vom Rücken zur Unterbrust verlaufenden Bauchgurt (1), an dem jeweils im seitlichen oberen Teil in einigem Abstand zueinander wenigstens zwei übliche, längenverstellbare Befestigungselemente (1a) angebracht sind;
- einen um die Vorderbrust oder Bug herum etwa horizontal auf beiden Seiten des Pferdes jeweils bis zum Bauchgurt verlaufenden Brustgurt (2);
- einen vom Bug, zwischen den Vorderbeinen hindurch zum Bauchgurt verlaufenden Unterbrustgurt (3);
- einen vom Widerrist beidseitig des Pferdes zum Brustgurt verlaufenden Widerristgurt (4);
- einen vom Widerristgurt entlang der Wirbelsäule über Rücken, Lende und Kruppe des Pferdes bis zum Schweifansatz verlaufenden, längenverstellbaren Schweifriemen (5) mit einer den Schweifansatz umfassenden Schweifschlaufe (5a);
- auf jeder Seite des Pferdes je einen, vom Widerristgurt etwa in Höhe des Schulteransatzes etwa horizontal bis zum Bauchgurt verlaufenden Seitengurt (6);
wobei die einzelnen Gurte des Grundgeschirrs mit üblichen Elementen zur Einstellung der Gurtlängen ausgerüstet sind und in einer für Pferdegeschirre üblichen Weise, erforderlichenfalls vollständig oder teilweise lösbar, miteinander verbunden sind;
(c) das Netz (7) durch die am oberen Teil des Bauchgurtes befindlichen längenverstellbaren Befestigungselemente (1a) gehalten wird;
(d) sich das Mittelteil (9) der Urin-Sammelvorrichtung trichterförmig verjüngt und zum Pferdehinterteil hin in einen schlauchförmigen Stutzen (9a) mit in etwa vertikaler Anordnung übergeht;
(e) auf dem Stutzen (9a) ein mit diesem über einen schlauchförmigen Hals (10a) fest verbundenes Kopfteil (10) mit einer an die Pferdevulva angepaßten, an dieser weitgehend dicht anliegenden Urin-Auffangmuschel (10b) sitzt; und
(f) die Befestigungselemente zur Befestigung der Urin-Sammelvorrichtung wenigstens einige, mit einer oder mehreren Ösen versehene Laschen (11a) und (11b) sind, wobei
(i) die Laschen (11a) beidseitig im seitlichen, oberen Bereich des Sammelbeutels (8) angeordnet sind, und
(ii) die Laschen (11b) beidseitig im oberen Bereich des Kopfteils (10) rückseitig zur Urin-Auffangmuschel (10b) angeordnet sind.

2. Haltegeschirr zur Befestigung einer Urin-Sammelvorrichtung an Pferden, **dadurch gekennzeichnet, dass**
(a) das Haltegeschirr ein Grundgeschirr aus Gurten und ein etwa den Lenden- und Kruppen-Bereich bedeckendes, seitlich bis maximal etwa zur unteren Rumpflinie herabfallendes, grobmaschiges Netz (7) umfasst, welches zur lagefixierenden, aber dennoch lösbaren Aufhängung einer unterhalb des Pferdebauches tragbaren Urin-Sammelvorrichtung dient;
(b) das Grundgeschirr aus Gurten umfasst:
- einen das Pferd umspannenden beidseitig vom Rücken zur Unterbrust verlaufenden Bauchgurt (1), an dem jeweils im seitlichen oberen Teil in einigem Abstand zueinander wenigstens zwei übliche, längenverstellbare Befestigungselemente (1a) angebracht sind;
- einen um die Vorderbrust oder Bug herum etwa horizontal auf beiden Seiten des Pferdes jeweils bis zum Bauchgurt verlaufenden Brustgurt (2);
- einen vom Bug, zwischen den Vorderbeinen hindurch zum Bauchgurt verlaufenden Unterbrustgurt (3);
- einen vom Widerrist beidseitig des Pferdes zum Brustgurt verlaufenden Widerristgurt (4);
- einen vom Widerristgurt entlang der Wirbelsäule über Rücken, Lende und Kruppe des Pferdes bis zum Schweifansatz verlaufenden, längenverstellbaren Schweifriemen (5) mit einer den Schweifansatz umfassenden Schweifschlaufe (5a);
- auf jeder Seite des Pferdes je einen, vom Widerristgurt etwa in Höhe des Schulteransatzes etwa horizontal bis zum Bauchgurt verlaufenden Seitengurt (6);
wobei die einzelnen Gurte des Grundgeschirrs mit üblichen Elementen zur Einstellung der Gurtlängen ausgerüstet sind und in einer für Pferdegeschirre üblichen Weise, erforderlichenfalls vollständig oder teilweise lösbar, miteinander verbunden sind; und
(c) das Netz (7) durch die am oberen Teil des Bauchgurtes befindlichen, längenverstellbaren Befestigungselemente gehalten wird.

3. Urin-Sammelvorrichtung für Stuten umfassend:
- einen langgestreckten, unterhalb des Pferdebauches in etwa horizontaler Lage aufhängbaren Sammelbeutel (8);
- ein sich an den Sammelbeutel im Bereich der Pferdehinterbeine anschließendes Mittelteil (9), das zwischen den Hinterbeinen hindurchführt; und
- Befestigungselemente zur Befestigung der Urin-Sammelvorrichtung an einem Haltegeschirr;
**dadurch gekennzeichnet, daß**
(a) sich das Mittelteil (9) trichterförmig verjüngt und zum Pferdehinterteil hin in einen schlauchförmigen Stutzen (9a) mit in etwa vertikaler Anordnung übergeht;
(b) auf dem Stutzen (9a) ein mit diesem über einen schlauchförmigen Hals (10a) fest verbundenes Kopfteil (10) mit einer an die Pferdevulva angepaßten, an dieser weitgehend dicht anliegenden Urin-Auffangmuschel (10b) sitzt;
(c) die Befestigungselemente zur Befestigung der Urin-Sammelvorrichtung an einem Haltegeschirr wenigstens einige, mit einer oder mehreren Ösen versehene Laschen (11a) und (11b) sind, wobei
(i) die Laschen (11a) beidseitig im seitlichen, oberen Bereich des Sammelbeutels (8) angeordnet sind, und
(ii) die Laschen (11b) beidseitig im oberen Bereich des Kopfteils (10) rückseitig zur Urin-Auffangmuschel (10b) angeordnet sind.

4. Urin-Sammelvorrichtung für Stuten gemäß Anspruch 3, wobei die Urinauffangmuschel (10b) des Kopfteils (10) in seitlicher Ansicht auf der Innenseite S-förmig verläuft, und in der Innenseitenaufsicht als ein ovaler bis eiförmiger, die Urin-Eintrittsöffnung (10c) umschließender Kranz (10d) ausgebildet ist.

5. Kopfteil (10) für eine Urin-Sammelvorrichtung, **gekennzeichnet durch**:
- eine im oberen Bereich angeordnete, in seitlicher Ansicht auf der Innenseite S-förmig verlaufende, an die Pferdevulva angepaßte und an dieser weitgehend dicht anliegende Urin-Auffangmuschel (10b), wobei
- die Urin-Auffangmuschel in der Innenseitenaufsicht als ein ovaler bis eiförmiger, die Urin-Eintrittsöffnung (10c) umschließender Kranz (10d) ausgebildet ist; und
- einen im unteren Bereich des Kopfteils befindlichen, schlauchförmigen Hals (10a) der zur Verbindung des Kopfteils mit dem Einlaufstutzen (9a) eines Urin-Sammelbeutels dient.

## Claims

1. A holding harness with a urine collecting device for horses, in particular mares, the urine collecting device comprising
- an elongate collecting pouch (8) which can be suspended in an approximately horizontal position beneath the belly of the horse;
- a middle section (9) which adjoins the collecting pouch in the region of the hind legs of the horse, which section is passed through between the hind legs; and
- fastening elements for fastening the urine collecting device to a holding harness;
**characterised in that**
(a) the holding harness comprises a basic harness consisting of straps and a large-mesh net (7) covering approximately the loin and croup region and descending laterally to at most approximately the lower rump line, on which the urine collecting device is suspended detachably but in a position-fixing manner;
(b) the basic harness consisting of straps comprises:
- a girth (1) passing around the horse and extending on both sides from the back to the lower breast, to which girth in each case at least two conventional fastening elements (1a) of adjustable length are attached in the lateral upper part at some distance from each other;
- a breast strap (2) extending around the front breast or shoulder approximately horizontally on both sides of the horse in each case as far as the girth (2);
- a lower breast strap (3) extending from the shoulder, through between the front legs to the girth;
- a withers strap (4) extending from the withers on both sides of the horse to the breast strap;
- a crupper (5) of adjustable length, extending from the withers strap along the spinal column over the back, loins and croup of the horse to the tail head, with a tail loop (5a) surrounding the tail head;
- on either side of the horse one side strap (6) extending from the withers strap approximately at the height of the start of the shoulder approximately horizontally as far as the girth;
the individual straps of the basic harness being equipped with conventional elements for adjusting the strap lengths and being joined together in a manner conventional for horse harnesses, if necessary in completely or partially detachable manner;
(c) the net (7) is held by the fastening elements (1a) of adjustable length located on the upper part of the girth;
(d) the middle section (9) of the urine collecting device tapers in a funnel shape and merges into a tubular connecting piece (9a) with an approximately vertical arrangement towards the rear part of the horse;
(e) a head part (10), with a urine collecting shell (10b) adapted to the vulva of the horse and lying largely tightly thereagainst, is seated on the connecting piece (9a) and connected securely thereto by means of a tubular neck (10a); and
(f) the fastening elements for fastening the urine collecting device are at least several flaps (11a) and (11b) provided with one or more eyelets,
(i) the flaps (11a) being arranged on both sides in the lateral, upper region of the collecting pouch (8), and
(ii) the flaps (11b) being arranged to the rear side of the urine collecting shell (10b) on both sides in the upper region of the head part (10).

2. A holding harness for fastening a urine collecting device to horses, **characterised in that**
(a) the holding harness comprises a basic harness consisting of straps and a large-mesh net (7) covering approximately the loin and croup region and descending laterally to at most approximately the lower rump line, which serves for the position-fixing yet detachable suspension of a urine collecting device which can be worn beneath the belly of the horse;
(b) the basic harness consisting of straps comprises:
- a girth (1) passing around the horse and extending on both sides from the back to the lower breast, to which girth in each case at least two conventional fastening elements (1a) of adjustable length are attached in the lateral upper part at some distance from each other;
- a breast strap (2) extending around the front breast or shoulder approximately horizontally on both sides of the horse in each case as far as the girth (2);
- a lower breast strap (3) extending from the shoulder, through between the front legs to the girth;
- a withers strap (4) extending from the withers on both sides of the horse to the breast strap;
- a crupper (5) of adjustable length, extending from the withers strap along the spinal column over the back, loins and croup of the horse to the tail head, with a tail loop (5a) surrounding the tail head;
- on either side of the horse one side strap (6) extending from the withers strap approximately at the height of the start of the shoulder approximately horizontally as far as the girth;
the individual straps of the basic harness being equipped with conventional elements for adjusting the strap lengths and being joined together in a manner conventional for horse harnesses, if necessary in completely or partially detachable manner; and
(c) the net (7) is held by the fastening elements of adjustable length located on the upper part of the girth.

3. A urine collecting device for mares, comprising:
- an elongate collecting pouch (8) which can be suspended in an approximately horizontal position beneath the belly of the horse;
- a middle section (9) which adjoins the collecting pouch in the region of the hind legs of the horse, which section is passed through between the hind legs; and
- fastening elements for fastening the urine collecting device to a holding harness;
**characterised in that**
(a) the middle section (9) tapers in a funnel shape and merges into a tubular connecting piece (9a) with an approximately vertical arrangement towards the rear part of the horse;
(b) a head part (10), with a urine collecting shell (10b) adapted to the vulva of the horse and lying largely tightly thereagainst, is seated on the connecting piece (9a) and securely connected thereto by means of a tubular neck (10a);
(c) the fastening elements for fastening the urine collecting device to a holding harness are at least several flaps (11a) and (11b) provided with one or more eyelets,
(i) the flaps (11a) being arranged on both sides in the lateral, upper region of the collecting pouch (8), and
(ii) the flaps (11b) being arranged to the rear side of the urine collecting shell (10b) on both sides in the upper region of the head part (10).

4. A urine collecting device for mares according to Claim 3, wherein the urine collecting shell (10b) of the head part (10) in a lateral view extends in an S-shape on the inside, and in an internal top view is formed as an oval to egg-shaped crown (10d) surrounding the urine entry opening (10c).

5. A head part (10) for a urine collecting device, **characterised by**:
- a urine collecting shell (10b) which is arranged in the upper region and which in a lateral view extends in an S-shape on the inside, is adapted to the vulva of the horse and lies largely tightly thereagainst,
- the urine collecting shell in an internal top view is formed as an oval to egg-shaped crown (10d) surrounding the urine entry opening (10c); and
- a tubular neck (10a) located in the lower region of the head part which serves for connecting the head part to the inlet connecting piece (9a) of a urine collecting pouch.

## Revendications

1. Ensemble harnais avec dispositif de récupération d'urine pour chevaux, en particulier des juments, le dispositif de récupération d'urine comprenant
- un sachet collecteur (8) allongé, pouvant être suspendu au-dessous du ventre du cheval dans une position à peu près horizontale,
- une partie centrale (9) qui se raccorde au sachet collecteur dans la zone des pattes postérieures du cheval, et qui passe entre les pattes postérieures, et
- des éléments de fixation pour fixer du dispositif de récupération d'urine sur un ensemble harnais,
**caractérisé en ce que**,
(a) l'ensemble harnais comprend un harnais de base constitué de sangles et un filet (7) à grosses mailles, qui recouvre sensiblement la zone lombaire et la zone de la croupe, descend sur le flanc jusqu'au maximum à peu près la ligne inférieure du corps et sur lequel le dispositif de récupération d'urine peut-être suspendu de façon amovible, mais fixe en position,
(b) l'élément harnais constitué de sangles comprend :
- une sangle ventrale (1) qui entoure le cheval, s'étend des deux côtés du dos en allant vers le bas du poitrail et sur laquelle sont disposés respectivement au moins deux éléments de fixation (1a) classiques et réglables en longueur respectivement, dans la partie supérieure latérale à quelque distance l'un de l'autre ;
- une sangle de poitrail (2) s'étendant autour du poitrail avant ou de l'épaule à peu près horizontalement sur les deux flancs du cheval respectivement jusqu'à la sangle ventrale,
- une sangle de poitrail inférieure (3) partant de l'épaule, passant entre les pattes antérieures avant et allant vers la sangle ventrale,
- une sangle de garrot (4) partant du garrot, s'étendant des deux côtés du cheval et allant vers la sangle de poitrail,
- une courroie de queue (5) réglable en longueur, partant de la sangle de garrot, s'étendant le long de la colonne vertébrale en passant sur le dos, la zone lombaire et la croupe du cheval et allant jusqu'au début de la queue avec une boucle de queue (5a) entourant le début de la queue,
- de chaque côté du cheval une sangle latérale (6) partant de la sangle de garrot s'étendant à peu près à la hauteur du début de l'épaule en allant à peu près horizontalement jusqu'à la sangle ventrale,
les sangles individuelles de l'ensemble harnais étant équipées d'éléments classiques pour régler les longueurs de sangle et étant reliées entre elles de façon classique pour des harnais de chevaux, si nécessaire complètement ou partiellement détachable,
(c) le filet (7) est maintenu par les éléments de fixation (1a) réglables en longueur et se trouvant à la partie supérieure de la sangle ventrale,
(d) la partie centrale (9) du dispositif de récupération d'urine se rétrécit en forme d'entonnoir et se transforme en direction de la partie postérieure du cheval en une tubulure (9a) en forme de flexible, disposée à peu près verticalement,
(e) une partie supérieure (10) est rendue solidaire de la tubulure (9a) par un col (10a) en forme de flexible et présente une coquille (10b) de récupération d'urine, adaptée à la vulve du cheval et s'appliquant de façon largement étanche sur celle-ci, et
(f) les éléments de fixation pour la fixation du dispositif de récupération d'urine présentent au moins quelques éclisses (11a) et (11b) dotées d'un ou de plusieurs oeillets,
(i) les éclisses étant disposées des deux côtés dans la zone latérale supérieure du sachet collecteur (8), et
(ii) les éclisses (11b) étant disposées des deux côtés dans la zone supérieure de la partie supérieure (10) sur le côté arrière par rapport à la coquille (10b) de récupération d'urine.

2. Ensemble harnais pour la fixation d'un dispositif de récupération d'urine sur les chevaux, **caractérisé en ce que**,
(a) l'ensemble harnais comprend un harnais de base constitué de sangles et un filet (7) à grosses mailles, recouvrant à peu près la zone lombaire et la zone de la croupe, descendant sur le côté jusqu'au maximum à peu près la ligne inférieure du corps, et servant à la suspension, fixe en position mais cependant amovible, d'un dispositif de récupération d'urine pouvant être porté sous le ventre du cheval,
(b) l'ensemble harnais constitué de sangles comprend :
- une sangle ventrale (1) qui entoure le cheval, s'étend des deux côtés depuis le dos vers le bas du poitrail et sur laquelle sont disposés respectivement au moins deux éléments de fixation (1a) classiques et réglables en longueur dans la partie supérieure latérale à quelque distance l'un de l'autre,
- une sangle de poitrail (2) s'étendant respectivement autour du poitrail avant ou de l'épaule à peu près horizontalement sur les deux flancs du cheval respectivement jusqu'à la sangle ventrale,
- une sangle de poitrail inférieure (3) partant de l'épaule, passant entre les pattes antérieures avant et allant vers la sangle ventrale,
- une sangle de garrot (4) partant du garrot, s'étendant des deux côtés du cheval et allant vers la sangle de poitrail,
- une courroie de queue (5) réglable en longueur, partant de la sangle de garrot, s'étendant le long de la colonne vertébrale, en passant sur le dos, la zone lombaire et la croupe du cheval et allant jusqu'au début de la queue avec une boucle de queue (5a) entourant le début de la queue,
- de chaque côté du cheval une sangle latérale (6) partant de la sangle de garrot, et s'étendant à peu près à la hauteur du début de l'épaule en allant à peu près horizontalement jusqu'à la sangle ventrale,
les sangles individuelles de l'ensemble harnais étant équipées d'éléments classiques pour régler les longueurs de sangle et étant reliées entre elles de façon classique pour des harnais de chevaux, si nécessaire complètement ou partiellement détachables, et
(c) le filet (7) est maintenu par les éléments de fixation réglables en longueur et se trouvant à la partie supérieure de la sangle ventrale.

3. Dispositif de récupération d'urine pour des juments comprenant :
un sac collecteur (8) allongé et pouvant être suspendu sous le ventre du cheval dans une position à peu près horizontale,
- une partie centrale (9) qui se raccorde au sac collecteur dans la zone des pattes postérieures du cheval, et passe entre les pattes postérieures, et
- des éléments de fixation pour fixer le dispositif de récupération d'urine sur un ensemble harnais,
**caractérisé en ce que**
(a) la partie centrale (9) se rétrécit en forme d'entonnoir et se transforme en direction de la partie arrière du cheval en une tubulure (9a) en forme de flexible, disposée à peu près verticalement,
(b) une partie supérieure (10) est rendue solidaire de la tubulure (9a) par un col (10a) en forme de flexible et présente une coquille (10b) de récupération d'urine adaptée à la vulve du cheval et s'appliquant de façon largement étanche sur celle-ci,
(c) les éléments de fixation pour la fixation du dispositif de récupération d'urine sur un ensemble harnais présente au moins quelques éclisses (11a) et (11b) dotées d'un ou de plusieurs oeillets,
(i) les éclisses (11a) étant disposées des deux côtés dans la zone latérale supérieure du sachet collecteur (8), et
(ii) les éclisses (11b) étant disposées des deux côtés dans la zone supérieure de la partie supérieure (10b) sur le côté arrière par rapport à la coquille (10b) de récupération d'urine.

4. Dispositif de récupération d'urine pour juments selon la revendication 3, dans lequel la coquille de récupération d'urine (10b) de la partie supérieure (10) s'étend en forme de S du côté intérieur lorsqu'on la voit latéralement et une couronne (10d) entourant l'orifice (10c) d'entrée de l'urine, est réalisée sous une forme ovale à ovoïde lorsqu'on la voit par dessus du côté intérieur.

5. Partie supérieure (10) pour un dispositif de récupération d'urine, **caractérisée par** :
- une coquille (10b) de récupération d'urine disposée dans la zone supérieure, s'étendant en forme de S en vue latérale sur le côté intérieur, adaptée à la vulve du cheval et s'appliquant de façon largement étanche sur celle-ci,
- la coquille de récupération d'urine étant réalisée en vue de dessus du côté intérieur comme une couronne (10d) de forme ovale à ovoïde, entourant l'orifice (10c) d'entrée d'urine, et
- un col (10a) en forme de flexible, qui trouve dans la zone inférieure de la partie supérieure, et qui sert à la liaison de la partie supérieure avec la tubulure d'entrée (9a) d'un sac de récupération d'urine.
